# EUROPÄISCHE PATENTANMELDUNG

(11) **EP 0 978 347 A2**
(43) Veröffentlichungstag der Anmeldung: **09.02.2000**
(21) Anmeldenummer: 99113562.5
(22) Anmeldetag: 07.07.1999
(51) Int. Cl.: B23P 15/00, B23P 11/00, H02K 15/00, H02K 7/16

(54) **Verfahren zur Herstellung eines rotationssymmetrischen, metallischen Verbundkörpers und mit diesem Verfahren hergestellter Aussenläufer für einen Radmotor**

(30) Priorität: 07.08.1998 DE 19835847
(71) Anmelder: FÜRSTLICH HOHENZOLLERNSCHE WERKE LAUCHERTHAL GMBH & CO., D-72517 Sigmaringendorf-Laucherthal (DE)
(72) Erfinder: Schweizer, Bernhard, 72517 Sigmaringendorf (DE); Piefke, Ulrich, 88374 Hosskirch (DE)
(74) Vertreter: Schwabe - Sandmair - Marx

(57) **Zusammenfassung**

Die Erfindung betrifft ein Verfahren zur Herstellung eines rotationssymmetrischen, metallischen Verbundkörpers aus einem metallischen Außenring mit achsparallelen Nuten in seiner Innenfläche und einer elektrisch und/oder thermisch leitfähigen Innenschicht aus einem Nichteisen- (NE) Metall, die die Nuten in dem Außenring ausfüllt und zumindest an einem Ende eine geschlossene Ringfläche bildet, dadurch gekennzeichnet, daß ein einteiliger, rohrförmiger NE-Metall-Körper mit geschlossenen Ringflächen an seinen beiden Enden und mit den Stegen zwischen den Nuten des Außenrings entsprechenden schlitzförmigen Durchbrechungen in die Innenfläche des Außenrings eingepreßt wird.

Mit diesem Verfahren kann ein Außenläufer für einen Radmotor mit einem Außenring aus Stahl, insbesondere Vergütungsstahl, mit achsparallelen Nuten in seiner Innenfläche und mit einer Innenschicht aus Kupfer, die die Nuten in dem Außenring ausfüllt und an beiden Enden jeweils eine geschlossene Ringfläche aufweist, hergestellt werden; dabei wird die Innenschicht aus Kupfer durch eine einteilige Kupfer-Käfigbuchse gebildet, die an ihren beiden Enden geschlossene Ringflächen und zwischen den beiden Ringflächen achsparallele, den Nuten des Außenrings entsprechende schlitzförmige Durchbrechungen aufweist und in die Innenfläche des Außenrings bis zum Schrumpfsitz eingepreßt ist.

## Beschreibung

Die Erfindung betrifft ein Verfahren zur Herstellung eines rotationssymmetrischen, metallischen Verbundkörpers der im Oberbegriff des Anspruchs 1 angegebenen Gattung sowie einen mit diesem Verfahren hergestellten Außenläufer für einen Radmotor der im Oberbegriff des Anspruchs 10 angegebenen Gattung.

Bei der üblichen Technik zur Herstellung eines Außenläufers mit einem Innenkäfig für Elektromotoren, insbesondere für Radmotoren, wird eine Vielzahl von Kupfer-Stäben (Kurzschlußstäben) in genau bearbeitete Nuten eines Außenrings aus Stahl eingelegt und an beiden Enden elektrisch leitend mit je einem Ring aus Kupfer verlötet. Diese Lötung muß hochwertig sein und erfordert in der Regel ein teures Silberlot. Ein weiterer Kostenfaktor ist die genaue Bearbeitung der Nuten, das Einbringen der Stäbe in die Nuten sowie die Befestigung der Stäbe in den Nuten.

Es ist auch schon vorgeschlagen worden, die innere Kupfer-Schicht durch ein Gießverfahren herzustellen und sie nach der Erstarrung des Kupfers durch eine plastische Verformung in engen Kontakt mit der Innenfläche des Außenrings zu bringen. In der Praxis hat jedoch die Realisierung dieses Verfahrens zu Problemen geführt.

Der Erfindung liegt deshalb die Aufgabe zu Grunde, ein Verfahren zur Herstellung eines rotationssymmetrischen, metallischen Verbundkörpers der im Anspruch 1 angegebenen Gattung sowie einen mit diesem Verfahren hergestellten Außenläufer für einen Radmotor der im Oberbegriff des Anspruchs 10 angegebenen Gattung zu schaffen, bei denen die oben erwähnten Nachteile nicht auftreten. Insbesondere sollen ein Verfahren und ein Außenläufer vorgeschlagen werden, die sich verfahrenstechnisch vergleichsweise einfach herstellen lassen und zu Innenschichten mit glatter, störungsfreier Oberfläche führen.

Für ein Verfahren der angegebenen Gattung wird dies durch die Merkmale des Kennzeichen des Anspruchs 1, und für einen Außenläufer der angegebenen Gattung wird dies durch die Merkmale des Anspruchs 10 erreicht.

Zweckmäßige Ausführungsformen werden durch die jeweiligen Unteransprüche definiert.

Die mit der Erfindung erzielten Vorteile beruhen auf folgender Funktionsweise: Ein Außenring, beispielsweise für den Außenläufer eines Radmotors, wird in der üblichen Weise aus Vergütungsstahl hergestellt, vorgedreht, und dann werden die Nuten in die Innenfläche in Breite und Tiefe fertig gefräst. Die Ecken im Nutgrund und die Kanten am Nutkopf sind gerundet.

Diese achsparallelen Nuten erstrecken sich bis zu zwei Ringflächen an den beiden Enden des Außenrings.

Anschließend wird ein rohrförmiger Kupfer-Rohling durch Schmieden oder Walzen hergestellt und auf die gewünschte Festigkeit wärmebehandelt. Dieser Kupfer-Rohling wird entsprechend den Spezifikationen ringsum gedreht.

Anschließend werden schlitzförmige Durchbrechungen entsprechend der Kontur, also entsprechend den Nuten bzw. den Stegen zwischen den Nuten des Außenrings, gefräst, und zwar zwischen zwei geschlossen Ringflächen an beiden Enden des Kupfer-Rohlings, so daß eine "Kupfer-Käfigbuchse" entsteht.

Der Außen-Durchmesser dieser Kupfer-Käfigbuchse wird auf einer Seite und über den Rücken der Stege zwischen den Durchbrechungen hinweg etwas, z.B. etwa 4 mm größer gedreht als der durch die Innenflächen der Stege des Außenrings definierte Innendurchmesser des Außenrings, damit ein leichtes Einfädeln und Vorfixieren der Kupfer-Käfigbuchse in dem Außenring aus Vergütungsstahl erfolgen kann. Der exakte Wert wird unter dem Gesichtspunkt der leichten Einführbarkeit einerseits und der Materialeinsparungen andererseits festgelegt.

Ein gewalztes, insbesondere jedoch geschmiedetes Werkstück aus Kupfer hat eine hohe Dehnung bis zu etwa 50 %, so daß eine Kaltverformung dieses Werkstückes auf einen größeren Durchmesser ohne Rißbildung leicht möglich ist.

Unter Ausnutzung dieser Tatsache wird die beschriebene Kupfer-Käfigbuchse zunächst mit einer geeigneten Preßvorrichtung plastisch nach außen verformt, wodurch die beiden seitlichen Kupferringe und die Stege zwischen den Durchbrechungen der Kupfer-Käfigbuchse bis nahe an den Innen-Durchmesser des Außenrings aus Stahl gedrückt werden.

Nach dieser Vorverformung wird die Kupfer-Käfigbuchse durch eine Dreiwalzenbiegemaschine ausgewalzt, wodurch sich eine Streckung der seitlichen Kupferringe in Umfangsrichtung ergibt. Dadurch kommen die seitlichen Kupferringe zu schrumpfsitzartiger Anlage an den geschlossenen Ringflächen an den beiden Enden des Außenrings. Gleichzeitig werden die Stege zwischen den Durchbrechungen der Kupfer-Käfigbuchse durch das Walzen formschlüssig in die Nutflächen des Außenrings aus Stahl eingepreßt. Es entsteht also ein Preßverband ohne Diffusionsverband.

Zum Schluß wird der so hergestellte, komplette Außenläufer entsprechend den vorgegebenen Spezifikationen fertig gedreht, gebohrt und entsprechend den Vorschriften konserviert.

Dieser Verfahrensablauf ermöglicht die freie, verfahrensunabhängige Auswahl von Werkstoffen nur unter Berücksichtigung der Anforderungen an die optimalen Eigenschaften wie elektrischer Leitwert, Eisenverluste, Festigkeit, Kerbschlagarbeit etc. Es besteht keine Rißgefahr und keine Lunkergefahr, wie es beim Gießen der Kupfer-Schicht der Fall ist.

Die Verwendung einer einteiligen Kupfer-Käfigbuchse gewährleistet die gleichbleibende, hohe elektrische Leitfähigkeit im Kupfer sowie eine gleichbleibende, im Vergleich mit gegossenem Kupfer höhere Festigkeit bei homogenem Gefüge des Kupfers.

Der Außenring aus Stahl wird in Bezug auf seine Festigkeit und Hystereseverluste (Eisenverluste) nicht durch Erwärmungen beeinflußt, wie sie beim Gießen, Löten oder Schweißen auftreten.

Da metallische Verbindungen zwischen Stahl und Kupfer (Diffusionsverbund) vermieden werden, können beide Werkstoffe ihre Eigenschaften optimal zur Geltung bringen.

Der bisher nicht zu vermeidende Leitwertabfall an Schweiß- oder Lötstellen kann ebenfalls ausgeschlossen werden.

Und schließlich ergibt sich bei Verwendung eines geschmiedeten Gefüges eine hohe Dauerbruchsicherheit.

Die Erfindung wird im Folgenden anhand eines Ausführungsbeispiels unter Bezugnahme auf die beiliegenden, schematischen Zeichnungen erläutert:

Es zeigen
Fig. 1 eine perspektivische Ansicht eines Außenrings aus einem Vergütungsstahl für den Außenläufer eines Radmotors,
Fig. 2 eine perspektivische Ansicht einer Kupfer-Käfigbuchse,
Fig. 3 eine Schnittdarstellung des Außenläufers für einen Radmotor mit dem Außenring und der eingesetzten und vorfixierten Kupfer-Käfigbuchse,
Fig. 4 eine Teil-Stirnansicht der gegen die Innenfläche des Außenrings vorgepreßten Kupfer-Käfigbuchse,
Fig. 5 eine Schemadarstellung der verwendeten Vierkant-Preßvorrichtung, und zwar
Fig. 5(a) eine Stirnansicht und
Fig. 5(b) eine Seitenansicht, und

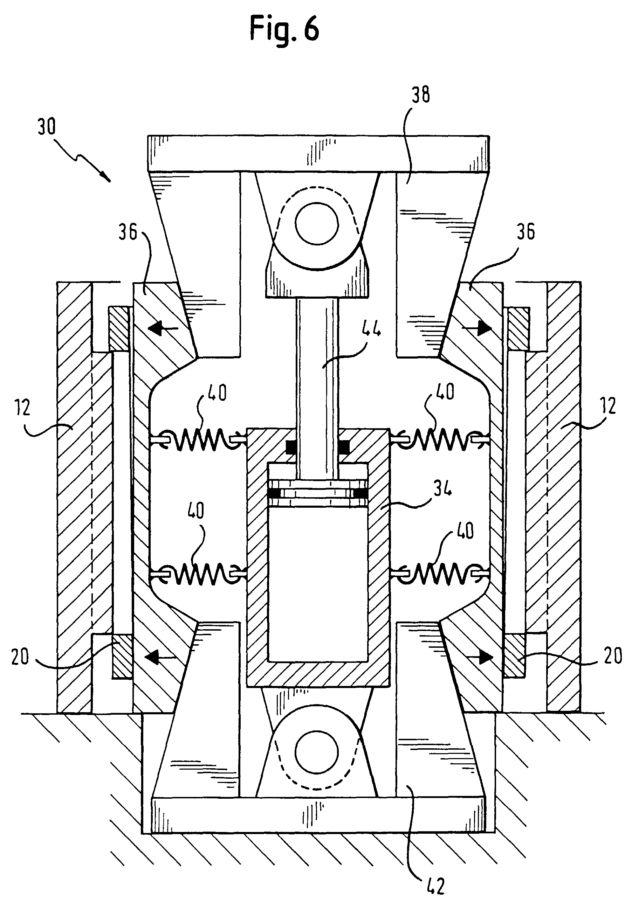

Fig. 6 eine schematische Detailansicht der Preßvorrichtung.

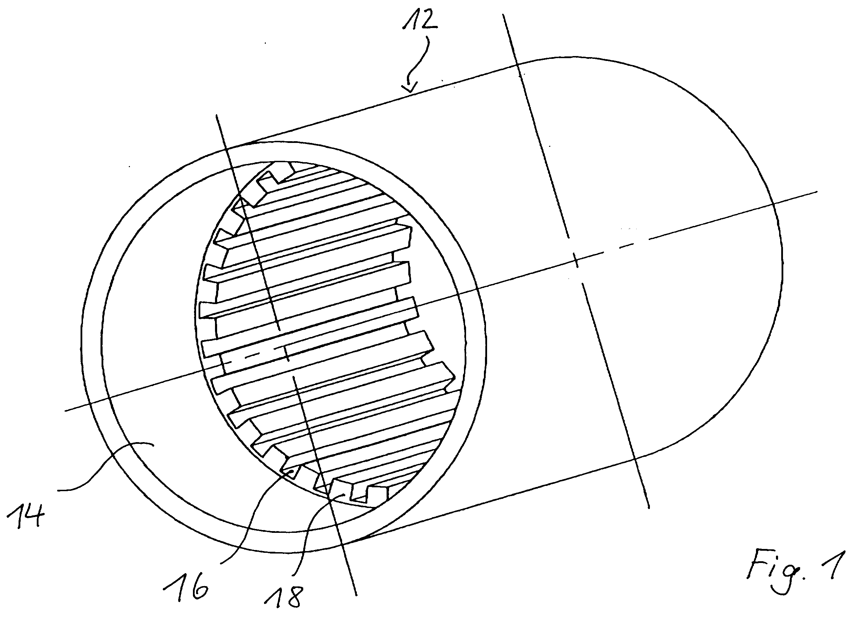

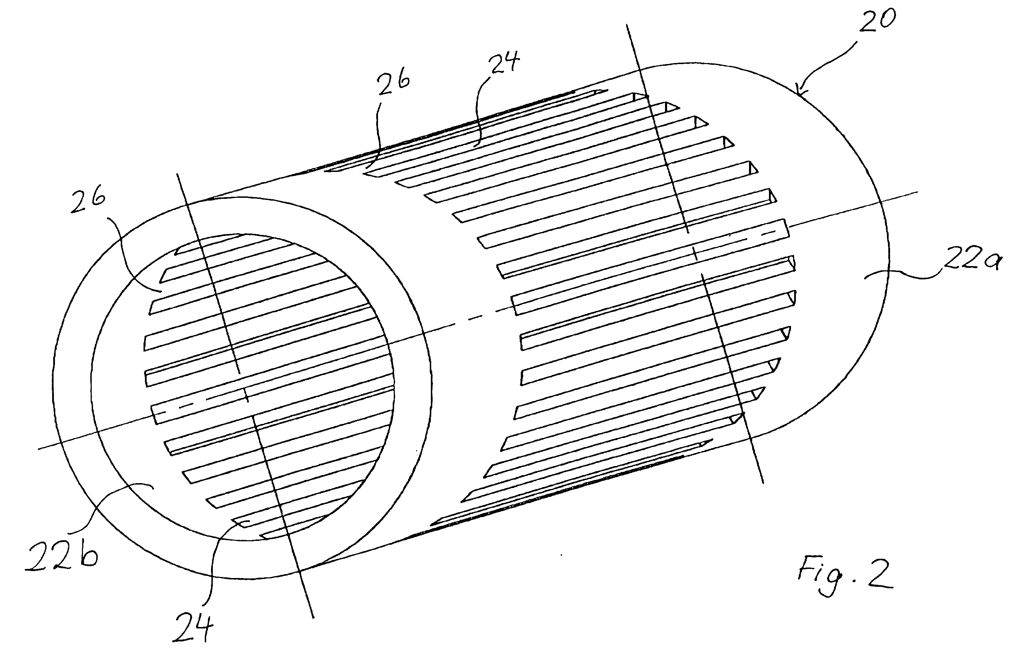

Der aus den Figuren ersichtliche, allgemein durch das Bezugszeichen 10 gekennzeichnete Außenläufer für einen Radmotor besteht aus einem Außenring 12 aus einem Vergütungsstahl, siehe Figur 1, und einer Käfigbuchse 20 aus Kupfer, siehe Figur 2.

Der Außenring 12 hat außen eine glatte, kreiszylindrische Fläche und weist an seiner inneren, ebenfalls kreiszylindrischen Fläche an den beiden Enden glatte, kreiszylindrische Ringflächen 14 auf. Zwischen den beiden Ringflächen 14 sind in die Innenfläche des Außenrings 12 Nuten 16 eingefräst, so daß Stege 18 zwischen den Nuten 16 entstehen. Die Nuten 16 und die Stege 18 haben etwa Rechteck-Form, wie aus Figur 1 ersichtlich ist.

Der Nutengrund befindet sich, in radialer Richtung des Außenrings 12 gesehen, etwas über den Ringflächen 14, wie in Figur 1 angedeutet ist.

Der Außenring 14 wird vorgedreht, und dann werden die Nuten 16 und damit die Stege 18 entsprechend der Breite und Tiefe, die für die Spezifikation des Außenläufers erforderlich sind, gefräst.

Die Ecken im Nutgrund und die Kanten am Nutkopf sind gerundet.

Zur Herstellung der Käfigbuchse 20 wird ein rohrförmiger Rohling aus Kupfer geschmiedet oder gewalzt und dann auf die gewünschte Festigkeit wärmebehandelt. Anschließend wird dieser Kupfer-Rohling entsprechend den Spezifikationen ringsum gedreht.

Dann werden schlitzförmige, achsparallele Durchbrechungen 24 eingefräst, deren Lage, Form und Abmessungen der Lage, der Form und den Abmessungen der Stege 18 des Außenrings 12 entsprechen, also der Innenkontur des Außenrings 12 aus Stahl.

Der Außen-Durchmesser der Kupfer-Käfigbuchse 20 wird auf einer Seite, also an einem Ende, vollständig, also über den Rücken der Stege 26 zwischen den schlitzförmigen Durchbrechungen 24 hinweg, etwa 4 mm größer gedreht als an dem gegenüberliegenden Ende der Kupfer-Käfigbuchse 20, um das anschließende Einschieben und Vorfixieren der Käfigbuchse 20 in dem Außenring 12 zu erleichtern.

Das gegenüberliegende Ende und die mittleren Stege 26 sind im Durchmesser größer als die entsprechende Kontur des Außenrings.

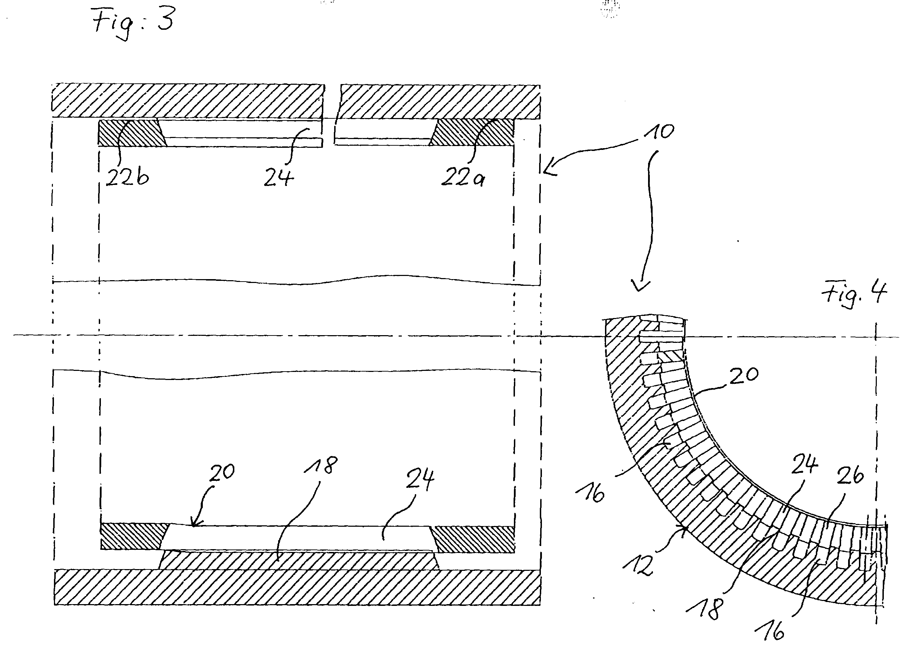

Diese Situation ist in Figur 3 gezeigt, wo man an dem gemäß der Darstellung linken Ende den Spalt zwischen der äußeren Ringfläche 22b der Käfigbuchse 20 und dem Innen-Durchmesser des Außenrings 12 erkennen kann. Die Käfigbuchse 20 ist dabei von der rechten Seite her eingeschoben worden, so daß sie an dem in Bezug auf die Einschubrichtung hinteren Ende mit der Ringfläche 22a an der Innenfläche des Außenrings 12 anliegt und dadurch vorfixiert wird. Eine weitere Vorfixierung ergibt sich im Bereich der mittleren Stege 26 aufgrund der oben erläuterten Dimensions-Beziehungen, da die Stege 26 dort die Stege 18 einklemmen.

In dieser Lage befinden sich die Stege 18 des Außenrings 12 über den schlitzförmigen Durchbrechungen 24 der Käfigbuchse 20, wie man in Figur 3 unten erkennt.

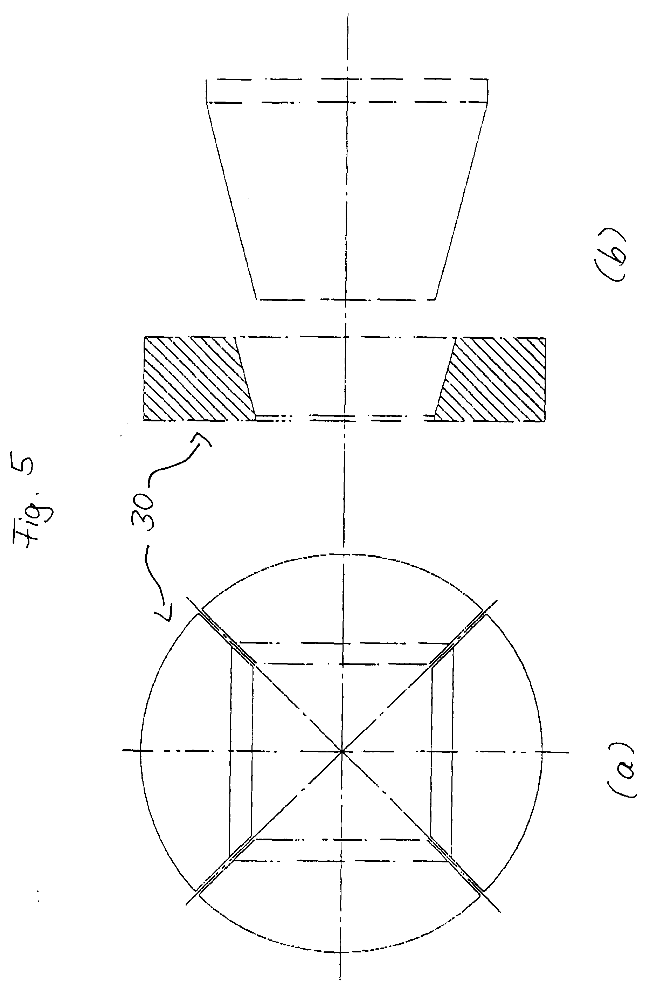

Der gewalzte und insbesondere der geschmiedete Kupfer-Werkstoff der Käfigbuchse 20 hat eine hohe Dehnung bis zu etwa 50 %, so daß eine Kaltverformung der Käfigbuchse 20 auf einen größeren Durchmesser ohne Rißbildung möglich ist. Hierzu werden, ausgehend von der in Figur 3 gezeigten Lage, die Kupfer-Käfigbuchse 20 zunächst mit einer geeigneten Preßvorrichtung 30 nach außen plastisch verformt und die Stege 26 zwischen den schlitzförmigen Durchbrechungen 24 sowie die beiden seitlichen Ringflächen 22a, 22b bis nahe an den Innen-Durchmesser des Außenrings 12 gedrückt. Dieser Zwischenzustand ist in Figur 4 dargestellt.

Anschließend werden mittels einer üblichen Dreiwalzenbiegemaschine die Käfigbuchse 20 ausgewalzt und dabei die ringförmigen Endbereiche 22a, 22b der Käfigbuchse 20 in Umfangsrichtung gestreckt. Dadurch kommen diese Ringbereiche 22a, 22b zu einer schrumpfsitzartigen Anlage, einer Art Preßverband ohne Diffusionsverband, in dem Außenring, wie in Figur 3 oben angedeutet ist.

Gleichzeitig werden die Stege 26 zwischen den schlitzförmigen Durchbrechungen 24 beim Walzen formflüssig in die Nutflächen zwischen den Stegen 18 des Außenrings 12 eingepreßt.

Anschließend wird der nun komplette Außenläufer 10 aus Außenring 12 und Kupfer-Käfigbuchse 20 entsprechend den vorgegebenen Spezifikationen fertiggedreht, gebohrt und, soweit erforderlich, konserviert.

Figur 5 zeigt eine Schemadarstellung der Vierkant-Preßvorrichtung 30, nämlich links in Figur 5(a) eine Frontansicht und rechts in Figur 5(b) eine Seitenansicht.

Details dieser Preßvorrichtung 30 sind in Figur 5 dargestellt. Die Preßvorrichtung 30 weist einen zentralen Hydraulikzylinder 34 auf, der auf der Längsachse von Außenring 12 und Käfigbuchse 20 in dem Hohlraum der Käfigbuchse 20 angeordnet wird. Der Hydraulikzylinder 34 ist unten schwenkbar, also über eine Gelenkverbindung, an einem unteren Spannkonus 42 befestigt. Die Kolbenstange 44 des Hydraulikzylinders 34 ist oben schwenkbar an einem oberen Spannkonus 38 angebracht.

Jeder Spannkonus 38, 42 weist nach innen in den Hohlraum der Käfigbuchse 20 hineinragende Vorsprünge mit konischen Außenflächen auf, an denen oben und unten jeweils zwei Preßbacken 36 anliegen.

Zwischen den Innenflächen der Preßbacken 36 und dem Hydraulikzylinder 34 sind Zugfedern 40 angeordnet.

Bei einer Betätigung des Hydraulikzylinders 34 bewegen sich die beiden Spannenkonen 38 und 42 nach innen in den Hohlraum der Käfigbuchse 20 hinein. Dabei gleiten die konischen Außenflächen ihrer Vorsprünge an den Anlageflächen der Preßbacken 36, wodurch diese radial nach außen gedrückt werden und dadurch die Käfigbuchse 20 radial nach außen verformen, also insbesondere die Stege 26 zwischen den schlitzförmigen Durchbrechungen 24 in die Nuten 16 des Außenrings 12 drücken und die ringförmigen Bereiche von Außenring 12 und Käfigbuchse 20 im Preßsitz in Anlage aneinander bringen.

Nach Beendigung der Verformung werden die Spannkonen 38, 42 wieder zurückgezogen. Unter der Einwirkung der Zugfedern 40 bewegen sich dann auch die Preßbacken 36 nach innen.

## Patentansprüche

1. Verfahren zur Herstellung eines rotationssymmetrischen, metallischen Verbundkörpers (10) aus einem metallischen Außenring (12) mit achsparallelen Nuten (16) in seiner Innenfläche (14) und einer elektrisch und/oder thermisch leitfähigen Innenschicht aus einem Nichteisen- (NE) Metall, die die Nuten (16) in dem Außenring (12) ausfüllt und zumindest an einem Ende eine geschlossene Ringfläche (14) bildet, dadurch gekennzeichnet, daß ein einteiliger, rohrförmiger NE-Metall-Körper (20) mit geschlossenen Ringflächen (22a, 22b) an seinen beiden Enden und mit den Stegen (18) zwischen den Nuten (16) des Außenrings (12) entsprechenden schlitzförmigen Durchbrechungen (24) in die Innenfläche des Außenrings eingepreßt wird.

2. Verfahren nach Anspruch 1, dadurch gekennzeichnet, daß der einteilige, rohrförmige NE-Metall-Körper (20) durch Schmieden oder Walzen hergestellt wird.

3. Verfahren nach Anspruch 1, dadurch gekennzeichnet, daß der einteilige, rohrförmige NE-Metall-Körper (20) wärmebehandelt wird.

4. Verfahren nach einem der Ansprüche 1 bis 3, dadurch gekennzeichnet, daß der einteilige, rohrförmige NE-Metall-Körper auf einer Seite einen kleineren Außen-Durchmesser hat als der freie Innen-Durchmesser zwischen den Stegen (18) des Außenrings (12).

5. Verfahren nach Anspruch 4, dadurch gekennzeichnet, daß die andere Seite sowie die mittleren Bereiche der Stege (26) zwischen den Durchbrechungen (24) des NE-Metall-Körpers (20) einen größeren freien Durchmesser haben als der Innen-Durchmesser zwischen den Stegen (18) des Außenrings (12).

6. Verfahren nach einem der Ansprüche 1 bis 5, dadurch gekennzeichnet, daß der NE-Metall-Körper (20) von seiner Seite mit dem kleineren Außen-Durchmesser her in den Hohlraum des Außenrings (12) eingeschoben und vorfixiert wird.

7. Verfahren nach Anspruch 6, dadurch gekennzeichnet, daß die Stege (26) zwischen den Durchbrechungen (24) und die Ringflächen (22a, 22b) an den beiden Enden des einteiligen, rohrförmigen NE-Metall-Körpers (20) unter plastischer Verformung nach außen bis nahe an den Innen-Durchmesser des Außenrings (12) gedrückt werden.

8. Verfahren nach Anspruch 7, dadurch gekennzeichnet, daß der vorgepreßte einteilige, rohrförmige NE-Metall-Körper (20) unter Streckung der beiden Ringflächen (22a, 22b) an seinen Enden in Umfangsrichtung ausgewalzt, dadurch eine Art Schrumpfsitz erzielt und die Stege (26) zwischen den Durchbrechungen (24) formflüssig in die Nutflächen des Außenrings (12) eingepreßt werden.

9. Verfahren nach einem der Ansprüche 1 bis 8, dadurch gekennzeichnet, daß zur Herstellung eines Außenläufers (10) für einen Radmotor ein Außenring (12) aus Stahl, insbesondere aus Vergütungsstahl, und ein einteiliger, rohrförmiger Kupfer-Körper (20) verwendet werden.

10. Außenläufer für einen Radmotor
a) mit einem Außenring (12) aus Stahl, insbesondere Vergütungsstahl, mit achsparallelen Nuten (16) in seiner Innenfläche (14) und
b) mit einer Innenschicht aus Kupfer, die die Nuten (16) in dem Außenring (12) ausfüllt und an beiden Enden jeweils eine geschlossene Ringfläche (22a, 22b) aufweist, dadurch gekennzeichnet, daß
c) die Innenschicht aus Kupfer durch eine einteilige Kupfer-Käfigbuchse (20) gebildet wird, die
d) an ihren beiden Enden geschlossenen Ringflächen (22a, 22b) und zwischen den beiden Ringflächen achsparallele, den Nuten (16) des Außenrings (12) entsprechende schlitzförmige Durchbrechungen (24) aufweist und
e) in die Innenfläche (14) des Außenrings (12) zum Schrumpfsitz eingepreßt ist.
